# EUROPÄISCHE PATENTSCHRIFT

(11) **EP 4 081 324 B1**
(45) Veröffentlichungstag und Bekanntmachung des Hinweises auf die Patenterteilung: **29.05.2024**
(21) Anmeldenummer: 21758614.8
(22) Anmeldetag: 27.07.2021
(51) Int. Cl.: B01D 29/21, B01D 46/24, B01D 46/52

(54) **FILTERELEMENT**
FILTER ELEMENT
ÉLÉMENT FILTRANT

(30) Priorität: 04.08.2020 DE 102020004704
(43) Veröffentlichungstag der Anmeldung: 02.11.2022
(73) Patentinhaber: Hydac Filtertechnik GmbH, 66280 Sulzbach/Saar (DE)
(72) Erfinder: MEES, Harald, 66822 Lebach (DE)
(74) Vertreter: Bartels und Partner, Patentanwälte
(86) Internationale Anmeldenummer: PCT/EP2021/071045
(87) Internationale Veröffentlichungsnummer: WO 2022/028961

(56) Entgegenhaltungen:
- EP-A1- 2 545 975
- WO-A2-2010/146037
- DE-A1- 19 746 751
- DE-A1-102010 051 756
- GB-A- 750 396
- JP-A- 2013 000 688

## Beschreibung

Die Erfindung betrifft ein Filterelement mit den Merkmalen im Oberbegriff von Anspruch 1.

DE 199 33 163 A1 betrifft ein rohrförmiges Filterelement zur Filtration von Fluiden mit einer Filtermatte, deren einander zugewandte Enden in ihrer Lage über eine Verbindungseinrichtung fixiert sind, die die Enden zumindest teilweise übergreift und die als Verbindungsleiste ausgebildet, in der Art eines Clips auf die Filtermattenenden aufgeschoben, diese für einen thermischen Schweißvorgang unter Einsatz einer Ultraschall-Schweißeinrichtung aneinander hält, wobei die angesprochene Schweißverbindung ohne Schweißzusatzwerkstoff auskommt.

Durch das bekannte Schweißverfahren wird des Weiteren eine Schweißkantenversiegelung zum Verhindern von Fasermigration erreicht, so dass beispielsweise eingesetzte Glasfasern des Filtermediums in der Filtermatte zurückgehalten werden. Dergestalt lässt sich unter Vermeidung von Klebstoffen, die regelmäßig umweltbelastend sind, zum Schließen der Filtermattenbahn und Aufstellen derselben zu einem rohrförmigen Filterelement sich eine hochfeste Verbindung herstellen, so dass auch keine Aushärtungszeit mehr für einen eingesetzten Klebstoff benötigt wird und das Element ist sofort einsetzbar.

Des Weiteren offenbart DE 102 35 275 A1 einen an seiner Außenseite an einem fluiddurchlässigen Stützrohr anliegenden Filterzylinder, der von seiner Innenseite her von dem zu filternden Fluid durchströmbar und aus einer Filtermattenbahn gebildet ist, die eine Folge von zumindest bereichsweise aneinander anliegenden Falten aufweist und deren beide freien Enden an einer Längsnaht-Verbindungsstelle zur Bildung eines Ringkörpers miteinander verbunden sind. Dadurch, dass der Ringkörper nach Ausbildung einer außenliegenden, die Enden der Filtermattenbahn verbindenden Schweißnaht derart umwendbar ist, dass die Schweißnaht im Betriebszustand des Filterelementes am gewendeten Ringkörper innenliegend ist, lässt sich der Schweißvorgang an der Außenseite des Elementes in einfacher Weise herstellen und durch Wenden der plissierten Filtermattenbahn von außen nach innen ist dann die eine Schwachstelle des Filterzylinders bildende Schweißnaht auf die Innenumfangsseite des Filterelementes gelegt und derart vor Beanspruchung, insbesondere in Form gegen ungewolltes Beulen der Filtermattenbahn, geschützt.

Die dahingehend bekannte Lösung kommt ohne zu verschweißenden Verbindungsclip aus und benötigt gleichfalls keinen Schweißzusatzwerkstoff. Um die derart einfach gehaltene Schweißnaht aber vor zu hohen Beanspruchungen zu schützen, die gegebenenfalls zu einem Versagen der Schweißnaht führen können, sind auf der Innenumfangsseite des Stützrohres zwei nach innen vorspringende Haltenasen angeformt, die einen U-förmigen Querschnitt miteinander bilden, in den die Schweißnaht schützend aufgenommen, sich mit ihren beidseitig nachfolgenden Filterfalten in kräfteentlastender Weise an den Haltenasen abstützen kann.

Durch das Schweißen einer Filtermattenbahn zum Herstellen einer festen Verbindung der einander benachbarten Längsränder wird ein relativ hoher Wärmeeintrag benötigt, der dazu führen kann, dass die miteinander zu verschweißenden Enden derart thermisch beansprucht sind, dass die Schweißverbindung selbst bei geringer Fluidbeanspruchung, sich wieder löst oder die Schweißverbindung wirksam erst gar nicht zustande kommt. Bei einem zu geringen thermischen Eintrag wiederum, kommt gegebenenfalls erst gar nicht eine verlässliche Schweißverbindung über die gesamte Länge der miteinander zu verbindenden Längsendbahnen zustande. Demgemäß ist bei beiden bekannten Lösungen mit hoher Sorgfalt der jeweilige Schweißvorgang durchzuführen.

Die WO 2010/146037 A2 beschreibt ein Filterelement mit den Merkmalen im Oberbegriff von Anspruch 1 zumindest bestehend aus einer plissierten Filtermattenbahn, die unter Bildung eines Hohlkörpers entlang ihrer freien, einander benachbarten Bahnenden an einer Verbindungsstelle verbunden ist, wobei die Verbindungsstelle aus mindestens einem Verbindungsteil gebildet ist, das mit nutförmigen Aufnahmekanälen versehen ist, die jeweils der Aufnahme eines Bahnendes der Filtermatte dienen.

Weitere Filterelemente gehen aus der DE 10 2010 051 756 A1, der EP 2 545 975 A1, der DE 197 46 751 A1, der JP 2013-688 A und der GB 750 396 A hervor.

Ausgehend von diesem Stand der Technik, liegt daher der Erfindung die Aufgabe zugrunde, die bekannten Lösungen dahingehend weiter zu verbessern, dass eine Fixierung der Filterfalten im Filterelement erreicht ist.

Eine dahingehende Aufgabe löst ein Filterelement mit den Merkmalen des Patentanspruches 1 in seiner Gesamtheit.

Gemäß dem Kennzeichen von Anspruch 1 ist vorgesehen, dass das Verbindungsteil Bestandteil eines zumindest teilweise fluiddurchlässigen Stützrohres ist, an dem sich die plissierte Filtermattenbahn nach Innen hin abstützt, und dass die Filtermattenbahn außenumfangsseitig eine, vorzugsweise elastisch nachgiebige, fluiddurchlässige Mantelfolie aufweist, die ein Aufspannen der Mattenbahn auf dem Stützrohr erlaubt, sobald die Bahnenden in den Aufnahmekanälen des Verbindungsteiles festgelegt sind.

Dadurch, dass die für die beiden benachbarten Bahnenden der Filtermattenbahn vorgesehene Verbindungsstelle aus mindestens einem Verbindungsteil gebildet ist, das mit nutförmigen Aufnahmekanälen versehen ist, die jeweils der Aufnahme eines Bahnendes der Filtermatte dienen, lassen sich die genannten Bahnenden ohne Kleben oder Schweißen in einer vorgebbaren Position fixieren. Dergestalt ist die Filtermattenbahn unter Bildung eines Hohlkörpers respektive Hohlzylinders definiert festgelegt. Da die Filtermattenbahn mit ihren einzelnen Filterlagen, die überwiegend aus Kunststoffmaterialien bestehen, sich zusammendrücken lässt, kann man die Enden entsprechend mit Vorspannung in den jeweiligen, nutförmigen Aufnahmekanal einschieben, wo dann das Bahnende aufgrund seiner Eigenelastizität, sicher festgelegt ist. Auch kann die Filtermattenbahn mit einer gewissen Vorspannung, außenumfangsseitig sich von seinem einen Bahnende zum anderen erstrecken, was die Vorspannung des Eingriffs der Bahnenden in die nutförmigen Aufnahmekanäle miterhöht und insoweit eine sichere Festlegung weiter begünstigt. Da auf eine Schweißverbindung zwischen den Bahnenden verzichtet ist, kann auch kein gesundheitsschädlicher Schweißrauch entstehen, der ansonsten erst über aufwändige Absauganlagen von der Schweißstelle wegzuführen ist, was mit entsprechend erhöhten Herstellkosten einhergeht. Zur weiteren Erhöhung des Festlegemomentes der Bahnenden in der jeweils zuordenbaren Aufnahmenut, können diese mit einem mit dem Kanal aushärtenden Klebstoff versehen sein, der aus entsprechend umweltfreundlichen Klebematerialien ausgewählt ist. Um insoweit einen herstellsicheren Klebeauftrag zu gewährleisten, kann ferner vorgesehen sein, die Bahnenden zu erhitzen, so dass die lagenförmigen Kunststoffmaterialien miteinander verbackend, eine geschlossene Klebeauftragfläche nach außen hin bilden.

Über die in die Aufnahmekanäle eingebrachten Bahnenden, lässt sich wie vorstehend bereits angedeutet eine Vorspannung respektive Zugspannung, insbesondere über den Außenumfang der Filtermattenbahn mit ihren Filterfalten erzeugen, was diese in ihrer jeweiligen Position hält, so dass auch bei einem Anströmen der Mattenbahn mit Fluid (Unfiltrat) die benachbarten Filterfalten nicht ungewollt aufeinander klappen können, was ansonsten die Filterleistung deutlich reduzieren würde, weil die Falten in verblockender Weise für eine Anströmung nicht mehr zur Verfügung stehen.

Bei einer besonders bevorzugten Ausführungsform des erfindungsgemäßen Filterelementes ist demnach vorgesehen, dass für die beiden Bahnenden jeweils ein Aufnahmekanal im Verbindungsteil vorgesehen ist, die parallel zueinander verlaufend vom Inneren des Filterelementes weg sich nach außen in Richtung zur Umgebung hin erstrecken. Insoweit verlaufen die Stegteile der Verbindungsvorrichtung parallel zu einem Teil der letzten Falte am jeweiligen Bahnmattenende und stützt diese unter Entlastung des Eingriffsbereiches in die jeweilige Nut zusätzlich ab. In weiterer vorteilhafter Ausgestaltung ist dabei vorgesehen, dass in die beiden Aufnahmekanäle die Endstücke der Bahnenden in rastender Weise eingreifen.

In einem bevorzugten Ausführungsbeispiel weisen die Aufnahmekanäle in Richtung des gebildeten Hohlkörpers einen stufenförmigen Versatz derart zueinander auf, dass entlang des Umfanges gesehen die Bahnenden in unterschiedlichen Niveaulagen zueinander in den jeweiligen Aufnahmekanal einmünden. Dadurch ist auf einfache Weise ein Nachbauschutz realisierbar. So ist ein derart ausgebildetes Filterelement ausschließlich in einer Filtervorrichtung zur Aufnahme derart ausgebildeter Filterelemente verwendbar.

Weitere Vorteile der erfindungsgemäßen Lösung sind Gegenstand der Unteransprüche.

Im Folgenden wird ein erfindungsgemäßes Filterelement anhand der Zeichnung näher erläutert. Dabei zeigen in prinzipieller und nicht maßstäblicher Darstellung die
- Fig. 1: in einem schematisch vereinfachten Querschnitt wesentliche Teile des erfindungsgemäßen Filterelements;
- Fig. 2: einen gegenüber Fig. 1 vergrößerten Teilquerschnitt des in Fig. 1 mit A bezeichneten Bereichs; und
- Fig. 3: in einem schematisch vereinfachten Teillängsschnitt das erfindungsgemäße Filterelement aus Fig. 1.

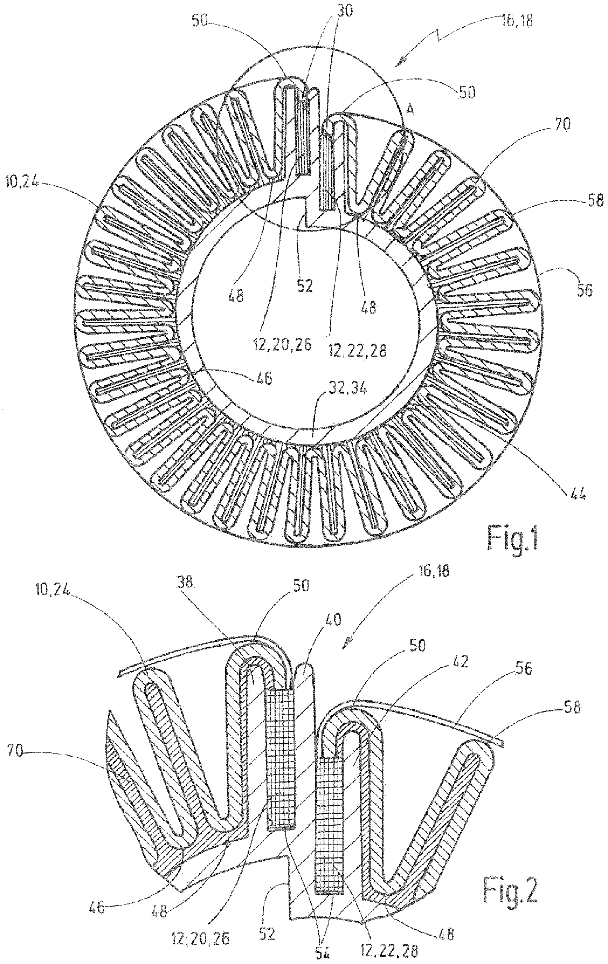

Fig. 1 und 2 zeigen einen Querschnitt durch ein erfindungsgemäßes Filterelement mit einer Filtermattenbahn 10. Die Filtermattenbahn 10 ist entlang ihrer freien, einander benachbarten Bahnenden 12 unter Bildung eines Hohlkörpers an einer Verbindungsstelle 16 verbunden. Die Verbindungsstelle 16 ist aus einem Verbindungsteil 18 gebildet, das mit nutförmigen Aufnahmekanälen 20, 22 versehen ist. Jeder Aufnahmekanal 20, 22 dient zur Aufnahme eines Bahnendes 12 der Filtermattenbahn 10.

Flächig ausgelegt ist die Filtermattenbahn 10 rechteckig ausgebildet mit zwei parallelen Längs- und zwei diesen gegenüber kürzeren, parallelen Querseiten. Zu einem Hohlkörper geformt, entsprechen die Längsseiten den Stirnseiten 24 der Filtermattenbahn 10. In Längsrichtung gesehen ist das jeweilige Bahnende 12 der Filtermattenbahn 10, also deren jeweilige Querseite, als ein erstes 26 und ein zweites 28 leistenförmiges Endstück ausgebildet. Die beiden Endstücke 26, 28 können an das jeweilige Ende 12 der Filtermattenbahn 10 angespritzt sein oder aus thermoplastischem Kunststoff vorgefertigt und jeweils an das jeweilige Ende 12 der Filtermattenbahn 10 angeschweißt sein. An das jeweilige Endstück 26, 28 der Filtermattenbahn 10 schließt sich ein Rand des Filtermaterials 30 der Filtermattenbahn 10 an, über das die beiden Endstücke 26, 28 miteinander verbunden sind. Die Filtermattenbahn 10 ist plissiert ausgebildet.

Das Verbindungsteil 18 ist ein integraler Bestandteil eines zumindest teilweise fluiddurchlässigen Stützrohres 32 zum Abstützen der Filtermattenbahn 10. Das Stützrohr 32 ist aus einem nahezu vollständig runden Rohrkörper 34 gebildet, von dessen Umfangsseite sich nach außen eine erste 38, eine zweite 40 und eine dritte 42 Rippe wegerstrecken, die in diese Richtung im Wesentlichen gleich lang ausgebildet sind. Die drei Rippen 38, 40 42 erstrecken sich parallel zueinander und in Axialrichtung zumindest über den perforierten Bereich des Rohrkörpers 34 und die gesamte axiale Höhe der Filtermattenbahn 10. Zwischen der ersten 38 und der zweiten 40 Rippe ist ein erster Aufnahmekanal 20 zum Eingreifen des ersten leistenförmigen Endstückes 26 und zwischen der zweiten 40 und der dritten 42 Rippe ist ein zweiter Aufnahmekanal 22 zum Eingreifen des zweiten leistenförmigen Endstückes 28 ausgebildet. Der jeweilige Aufnahmekanal 20, 22 ist im Querschnitt gesehen im Wesentlichen U-förmig ausgebildet. Die drei Rippen 38, 40 42 und zumindest der die drei Rippen 38, 40, 42 verbindende Teil des Rohrkörpers 34 bilden zusammen das Verbindungsteil 18. Der jeweilige Aufnahmekanal 20, 22 ist derart ausgebildet, dass zumindest das jeweilige leistenförmige Endstück 26, 28 vollständig darin rastend aufnehmbar ist.

Ist die Filtermattenbahn 10 mit dem Stützrohr 32 verbunden, in dem das erste Endstück 26 in dem ersten Aufnahmekanal 20 und das zweite Endstück 28 in dem zweiten Aufnahmekanal 22 rastend festgelegt ist, stützt sich die plissierte Filtermattenbahn 10 mit ihrer dem Rohrkörper 34 zugewandten Seite mittelbar oder unmittelbar jeweils streifenförmig im Bereich der Faltentäler 46 ihres Filtermaterials an dem Außenumfang 44 des Rohrkörpers 34 ab. Dabei verläuft der jeweilige das Endstück 26, 28 aufweisende Endbereich der Filtermattenbahn 10, in Richtung seines jeweiligen Endes gesehen, ausgehend von seinem letzten Faltental 48 zunächst in Richtung von dem Stützrohrinneren weg entlang der der zweiten Rippe 40 abgewandten Seite der ersten 38 bzw. dritten 42 Rippe und mündet dann unter Ausbildung seines jeweiligen letzten Faltenberges 50 in Richtung des Stützrohrinneren in den jeweiligen Aufnahmekanal 20, 22 ein.

Der Rohrkörper 34 weist, im Querschnitt gesehen, unter Ausbildung einer Stufe 52 eine Spiral- oder Schneckenform auf, die einen streifenförmigen Bereich des kleinsten Radius des Rohrkörpers 34 mit einem streifenförmigen Bereich des größten Radius des Rohrkörpers 34 verbindet. Dabei erstreckt sich die zweite Rippe 40 in einem streifenförmigen Bereich des Außenumfanges 44 des Rohrkörpers 34 von dem Rohrkörper 34 radial nach außen hin weg, in dem der Rohrkörper 34 seinen größten Radius aufweist, so dass die zweite Rippe 40 mit der Stufe 52 des Rohrkörpers 34 beidseitig fluchtet. Die erste Rippe 38 erstreckt sich in einem streifenförmigen Bereich des Außenumfangs 44 des Rohrkörpers 34 von dem Rohrkörper 34 nach außen hin weg, in dem der Rohrkörper 34 einen gegenüber dem größten Radius geringfügig kleineren Radius aufweist, so dass die freien Enden der ersten 38 und der zweiten 40 Rippe im Wesentlichen bündig miteinander abschließen. Die dritte Rippe 42 erstreckt sich in einem streifenförmigen Bereich des Außenumfanges 44 des Rohrkörpers 34 von dem Rohrkörper 34 nach außen hin weg, in dem der Rohrkörper 34 einen gegenüber seinem kleinsten Radius geringfügig größeren Radius aufweist. Daher weist der parallel zum Innenumfang des Rohrkörpers 34 verlaufende Grund 54 des zweiten Aufnahmekanals 22 und das freie Ende der dritten Rippe 42 in Richtung des Stützrohrinneren jeweils einen Versatz zu dem parallel zum Innenumfang des Rohrkörpers 34 verlaufenden Grund 54 des ersten Aufnahmekanals 20 bzw. den freien Enden der ersten 38 und zweiten 40 Rippe auf. Diese Versätze entsprechen einander und der Höhe der Stufe 52 des Rohrkörpers 34 im Wesentlichen.

Dadurch münden, in Radialrichtung gesehen, die beiden Bahnenden 12 der Filtermattenbahn 10 in unterschiedlichen Niveaulagen zueinander in den jeweiligen Aufnahmekanal 20, 22 ein.

Auf der dem Stützrohr 32 abgewandten Seite der Filtermattenbahn 10 erstreckt sich zwischen den beiden Endstücken 26, 28 über die plissierte Filtermattenbahn 10 eine elastisch nachgiebige und fluiddurchlässige Mantelfolie 56 derart, dass die Mantelfolie 56 an sämtlichen Faltenbergen 58 der plissierten Filtermattenbahn 10 anliegend, die Filtermattenbahn 10 in Richtung des Rohrkörpers 34 des Stützrohres 32 radial vorspannt. Dazu ist die rechteckige Mantelfolie 56, flächig ausgelegt, zumindest in Längsrichtung kürzer als die flächig ausgelegte rechteckige Filtermattenbahn 10 ausgebildet. Die Vorspannwirkung ergibt sich, sobald die Endstücke 26, 28 in den Aufnahmekanälen 20, 22 des Verbindungsteiles 18 festgelegt sind. Die beiden Endstücke 26, 28 können, genauso wie an die Filtermattenbahn 10, an das Ende 12 der Mantelfolie 56 angespritzt sein oder aus thermoplastischem Kunststoff vorgefertigt und jeweils an das Ende 12 der Filtermattenbahn 10 angeschweißt sein. Die Mantelfolie 56 kann mit Informationen versehen sein und/oder eine Lochstanzung aufweisen.

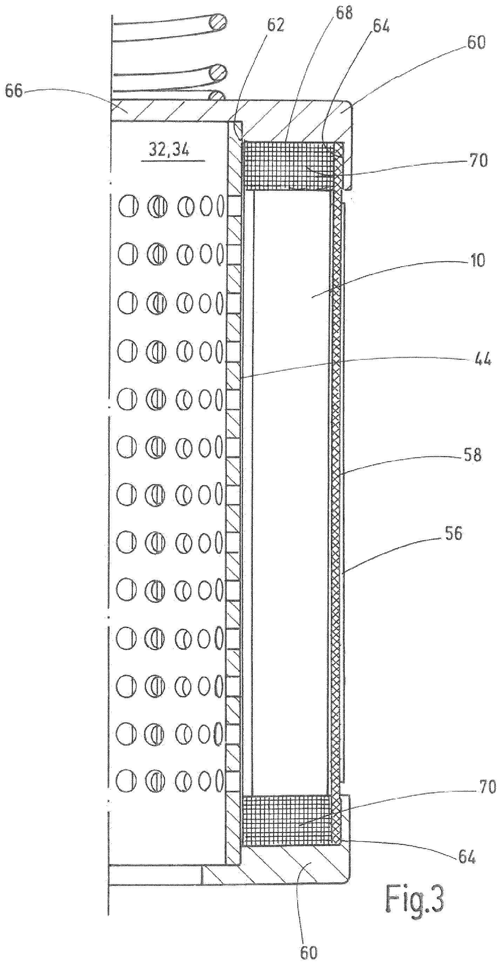

Wie Fig. 3 zeigt, ist die Filtermattenbahn 10 an ihren beiden gegenüberliegenden, stirnseitigen Enden jeweils mit einer üblich ausgebildeten Endkappe 60 versehen. Die axiale Stärke der jeweiligen Endkappe 60 nimmt ausgehend von ihrer Längsachse in Radialrichtung nach außen unter Ausbildung zweier Stufen 62, 64 zu, wobei die äußere Stufe 64 durch eine sich in Axialrichtung von einem jeweiligen scheibenförmigen Endkappengrundkörper 66 wegerstreckende Wand 64 gebildet ist. Die Wand 64 begrenzt radial nach außen eine ringförmige Aufnahme 68 für das jeweilige axiale Ende der Filtermattenbahn 10, die in Radialrichtung nach innen von der jeweiligen Endkappe 60 unbegrenzt ist.

Sind das Stützrohr 32 und die plissierte Filtermattenbahn 10 in Kombination mit der Mantelfolie 56 zwischen den beiden Endkappen 60 angeordnet, gelangt das in diesem Bereich perforationsfreie Stützrohr 32 außenseitig in den beiden Endbereichen seines Außenumfangs an der inneren Stufe 62 der jeweiligen Endkappe 60 und die Filtermattenbahn 10 innenseitig an der Außenseite des Stützrohrs 32 und außenseitig an der äußeren Stufe 64, also der Wand, zur Anlage. Die Mantelfolie 56 ist derart ausgebildet, dass diese in Axialrichtung von der Außenwand 64 der jeweiligen Endkappe 60 beabstandet ist.

Auf der dem Stützrohr 32 zugewandten Seite der Filtermattenbahn 10 ist in den freien stirnseitigen Randbereiche der Seitenfläche der Filtermattenbahn 10 jeweils eine elastische und streifenförmige Dichtbahn 70 mit eingefaltet, die die Falten der Filtermattenbahn 10 untereinander und gegenüber der ersten bzw. dritten Rippe sowie die Filtermattenbahn 10 in Radialrichtung nach innen gegenüber dem in diesem Bereich perforationsfreien Stützrohr 32 abdichtet. Die Dichtbahn 70 kann vor einem Versiegeln der Filtermattenbahn 10 oder nach einem Versiegeln an den stirnseitigen Randbereichen der Seitenfläche der Filtermattenbahn 10 angebracht werden. Durch die Dichtbahn 70 ist das Innere des Filterelementes bei aufgesetzten Endkappen 70 gegenüber der Umgebung abgedichtet. Es ist ebenso denkbar, dass alternativ ein Dichtstoff vorgesehen ist, der zu diesem Zweck mit einem Dosiersystem an den freien stirnseitigen Endbereichen der Filtermattenbahn 10 aufgebracht ist.

## Patentansprüche

1. Filterelement zumindest bestehend aus einer plissierten Filtermattenbahn (10), die unter Bildung eines Hohlkörpers entlang ihrer freien, einander benachbarten Bahnenden (12) an einer Verbindungsstelle (16) verbunden ist, wobei die Verbindungsstelle (16) aus mindestens einem Verbindungsteil (18) gebildet ist, das mit nutförmigen Aufnahmekanälen (20, 22) versehen ist, die jeweils der Aufnahme eines Bahnendes (12) der Filtermatte (10) dienen,
**dadurch gekennzeichnet,**
**dass** das Verbindungsteil (18) Bestandteil eines zumindest teilweise fluiddurchlässigen Stützrohres (32) ist, an dem sich die Filtermattenbahn (10) nach Innen hin abstützt, und
**dass** die Filtermattenbahn (10) außenumfangsseitig eine fluiddurchlässige Mantelfolie (56) aufweist, die ein Aufspannen der Mattenbahn (10) auf dem Stützrohr (32) erlaubt, sobald die Bahnenden (12) in den Aufnahmekanälen (20, 22) des Verbindungsteiles (18) festgelegt sind.

2. Filterelement nach Anspruch 1, **dadurch gekennzeichnet, dass** das Verbindungsteil (18) sich über die gesamte axiale Länge der hohlkörperartigen Filtermattenbahn (10) erstreckt.

3. Filterelement nach Anspruch 1 oder 2, **dadurch gekennzeichnet, dass** die Tiefe des jeweiligen Aufnahmekanales (20, 22) derart gewählt ist, dass das zuordenbare Bahnende (12), gebildet aus der letzten Filterfalte der Filtermattenbahn (10), die in das Innere des Hohlkörpers ausmündet, aufgenommen ist.

4. Filterelement nach einem der vorstehenden Ansprüche, **dadurch gekennzeichnet, dass** das jeweilige Bahnende (12) aus einem leistenförmigen Endstück (26, 28) besteht, an das jeweils endseitig ein Längsrand des Filtermaterials der Filtermattenbahn (10) anschließt.

5. Filterelement nach einem der vorstehenden Ansprüche, **dadurch gekennzeichnet, dass** für die beiden Bahnenden (12) jeweils ein Aufnahmekanal (20, 22) im Verbindungsteil (18) vorgesehen ist, die parallel zueinander verlaufend vom Innern des Filterelementes weg sich nach außen hin in Richtung zur Umgebung hin erstrecken.

6. Filterelement nach einem der vorstehenden Ansprüche, **dadurch gekennzeichnet, dass** das Verbindungsteil (18) einstückiger Bestandteil des Stützrohres (32) ist.

7. Filterelement nach einem der vorstehenden Ansprüche, **dadurch gekennzeichnet, dass** die Aufnahmekanäle (20, 22) in Richtung des gebildeten Hohlkörpers einen stufenförmigen Versatz derart zueinander aufweisen, dass entlang des Umfanges gesehen die Bahnenden (12) in unterschiedlichen Niveaulagen zueinander in den jeweiligen Aufnahmekanal (20, 22) einmünden.

8. Filterelement nach einem der vorstehenden Ansprüche, **dadurch gekennzeichnet, dass** die Mantelfolie (56) elastisch nachgiebig ist.

9. Filterelement nach einem der vorstehenden Ansprüche, **dadurch gekennzeichnet, dass** die Filtermattenbahn (10) an ihren beiden gegenüberliegenden, stirnseitigen Enden mit einer Endkappe (60) versehen ist.

10. Filterelement nach Anspruch 9, **dadurch gekennzeichnet, dass** zumindest in einem freien stirnseitigen Endbereich der Filtermattenbahn (10) eine streifenförmige Dichtbahn (70) mit eingefaltet ist, die das Innere des Elementes gegenüber der Umgebung bei aufgesetzter Endkappe (60) abdichtet.

## Claims

1. Filter element at least consisting of a pleated filter mat web (10), which is connected along its free, mutually adjacent web ends (12) at a connection point (16), forming a hollow body, wherein the connection point (16) is formed of at least one connecting part (18) which is provided with groove-shaped receiving channels (20, 22), each of which serves to receive a web end (12) of the filter mat (10),
**characterised in that**,
the connecting part (18) is part of an at least partially fluid-permeable supporting tube (32) on which the filter mat web (10) is inwardly supported, and
**in that** the filter mat web (10) has a fluid-permeable cover film (56) on the outer circumference, which allows the mat web (10) to be clamped on the supporting tube (32) as soon as the web ends (12) are fixed in the receiving channels (20, 22) of the connecting part (18).

2. Filter element according to claim 1, **characterised in that** the connecting part (18) extends over the entire axial length of the hollow-body-like filter mat web (10).

3. Filter element according to claim 1 or 2, **characterised in that** the depth of the respective receiving channel (20, 22) is selected in such a manner that the associated web end (12), formed of the last filter pleat of the filter mat web (10) which opens out into the interior of the hollow body, is received.

4. Filter element according to one of the preceding claims, **characterised in that** the respective web end (12) consists of a strip-shaped end piece (26, 28) to which a longitudinal edge of the filter material of the filter mat web (10) adjoins at each end.

5. Filter element according to one of the preceding claims, **characterised in that** one receiving channel (20, 22) is provided in each case in the connecting part (18) for the two web ends (12), which channels extend parallel to each other away from the interior of the filter element towards the outside in the direction of the environment.

6. Filter element according to one of the preceding claims, **characterised in that** the connecting part (18) is an integral part of the supporting tube (32).

7. Filter element according to one of the preceding claims, **characterised in that** the receiving channels (20, 22) have a step-shaped offset relative to each other in the direction of the hollow body formed in such a manner that, viewed along the circumference, the web ends (12) open into the respective receiving channel (20, 22) at different levels to each other.

8. Filter element according to one of the preceding claims, **characterised in that** the cover film (56) is elastically yielding.

9. Filter element according to one of the preceding claims, **characterised in that** the filter mat web (10) is provided with an end cap (60) on its two mutually opposing, end-face ends.

10. Filter element according to claim 9, **characterised in that** a strip-shaped sealing web (70) is also folded into at least one free end-face end region of the filter mat web (10), which sealing web seals the interior of the element with respect to the environment when the end cap (60) is fitted.

## Revendications

1. Elément filtrant constitué au moins d'une nappe (10) plissée de non-tissé filtrant, qui, avec formation d'un corps creux, est reliée le long de ses extrémités (12) de nappe libres voisines l'une de l'autre en un point (16) de liaison, dans lequel le point (16) de liaison est formé d'au moins une partie (18) de liaison, qui est pourvue de canaux (20, 22) de réception en forme de rainures, qui servent chacun à la réception d'une extrémité (12) de la nappe du non-tissé (10) filtrant,
**caractérisé**
**en ce que** la partie (18) de liaison est une partie constitutive d'un tube (32) d'appui perméable aux fluides au moins en partie, auquel la nappe (10) de non-tissé filtrant s'appuie vers l'intérieur, et
**en ce que** la nappe (10) de non-tissé filtrant a, du côté du pourtour extérieur, une feuille (56) d'enveloppe perméable aux fluides, qui autorise une fixation de la nappe (10) de non-tissé au tube (32) d'appui, dès que les extrémités (12) de la nappe sont fixées dans les canaux (20, 22) de réception de la partie (18) de liaison.

2. Elément filtrant suivant la revendication 1, **caractérisé en ce que** la partie (18) de liaison s'étend sur toute la longueur axiale de la nappe (10) de non-tissé filtrant de type en corps creux.

3. Elément filtrant suivant la revendication 1 ou 2, **caractérisé en ce que** la profondeur du canal (20, 22) de réception respectif est choisi de manière à recevoir l'extrémité (12) de la nappe pouvant être associée formée du dernier pli de filtre de la nappe (10) de non-tissé filtrant, qui débouche à l'intérieur du corps creux.

4. Elément filtrant suivant l'une des revendications précédentes, **caractérisé en ce que** l'extrémité (12) respective de la nappe est en un embout (26, 28) en forme de baguette, auquel se raccorde respectivement, du côté de l'extrémité, un bord longitudinal de la matière filtrante de la nappe (10) de non-tissé filtrant.

5. Elément filtrant suivant l'une des revendications précédentes, **caractérisé en ce qu'**il est prévu, pour les deux extrémités (12) de la nappe, respectivement un canal (20, 22) de réception dans la partie (18) de liaison, qui s'étendent parallèlement l'un à l'autre en s'éloignant de l'intérieur de l'élément filtrant vers l'extérieur en direction de l'environnement.

6. Elément filtrant suivant l'une des revendications précédentes, **caractérisé en ce que** la partie (18) en liaison est une partie constitutive d'une seule pièce du tube (32) d'appui.

7. Elément filtrant suivant l'une des revendications précédentes, **caractérisé en ce que** les canaux (20, 22) de réception ont, dans la direction du corps creux formé, un décalage en forme de palier les uns par rapport aux autres, de manière à ce que, considéré suivant le pourtour, les extrémités (12) de la nappe débouchent en des positions en niveau différentes les unes par rapport aux autres dans le canal (20, 22) de réception respectif.

8. Elément filtrant suivant l'une des revendications précédentes, **caractérisé en ce que** la feuille (56) d'enveloppe cède élastiquement.

9. Elément filtrant suivant l'une des revendications précédentes, **caractérisé en ce que** la nappe (10) de non-tissé filtrant est pourvue, à ses deux extrémités frontales opposées, d'une coiffe (60) d'extrémité.

10. Elément filtrant suivant la revendication 9, **caractérisé en ce qu'**au moins dans une partie d'extrémité libre du côté frontal de la nappe (10) de non-tissé filtrant est incorporée par pliage une nappe (70) d'étanchéité en forme de strie, qui rend étanche l'intérieur de l'élément par rapport à l'environnement, lorsque la coiffe (60) d'extrémité est posée.
